# EUROPÄISCHE PATENTSCHRIFT

(11) **EP 1 156 204 B1**
(45) Veröffentlichungstag und Bekanntmachung des Hinweises auf die Patenterteilung: **09.02.2005**
(21) Anmeldenummer: 01103731.4
(22) Anmeldetag: 15.02.2001
(51) Int. Cl.: F02F 7/00

(54) **Kurbelwellenlagerung für Brennkraftmaschinen**
Crank shaft bearing for combustion engines
Paliers de vilebrequin pour moteurs à combustion

(30) Priorität: 17.05.2000 DE 10024217
(43) Veröffentlichungstag der Anmeldung: 21.11.2001
(73) Patentinhaber: MAN NUTZFAHRZEUGE AG, 80995 München (DE)
(72) Erfinder: Möller, Heribert, Dipl-Ing. (FH), 91623 Sachsen (DE); Winter, Josef, Ing. (grad.), 91126 Rednitzhembach (DE)

(56) Entgegenhaltungen:
- EP-B- 0 885 354
- PATENT ABSTRACTS OF JAPAN vol. 018, no. 269 (M-1609), 23. Mai 1994 (1994-05-23) & JP 06 042528 A (KUBOTA CORP), 15. Februar 1994 (1994-02-15)
- PATENT ABSTRACTS OF JAPAN vol. 007, no. 254 (M-255), 11. November 1983 (1983-11-11) & JP 58 137612 A (NISSAN JIDOSHA KK), 16. August 1983 (1983-08-16)

## Beschreibung

Die Erfindung bezieht sich auf eine Kurbelwellenlagerung gemäß dem Gattungsbegriff des Patentanspruches 1.

Durch EP 885 354 B1 ist eine Kurbelwellenlagerung bekannt, bei der die Kurbelwelle in geteilten Lagern geführt ist. Die Lagerschalen sind zwischen den Lagerstühlen und den Lagerdeckeln angeordnet. Lagerdeckel und Lagerstühle bilden zunächst eine gußtechnische Einheit. Darüber hinaus sind die Lagerdeckel mit seitlichen Fortsätzen versehen, welche in Motorlängsrichtung zu beiden Seiten der Kurbelwelle durch Versteifungselemente untereinander verbunden sind. Lagerstühle, Lagerdeckel und Versteifungselemente bilden zunächst in der Herstellung eine Gußeinheit. Zum Einbau der Lagerschalen werden die Lagerstühle und die Lagerdeckel durch Bruchtrennen in der Ebene der Kurbelwellenmitte geteilt. Lagerdeckel, Lagerstühle und Versteifungselemente sind hohl ausgeführt, sie benötigen also beim Gießen einen Kern, der nach dem Guß über diverse Öffnungen wieder entfernt werden muß. Es ist leicht einzusehen, daß die Entfernung des Kerns mit hohem Arbeitsaufwand verbunden ist. Die Hohlprofile können zwar nach dem Entfernen der Kerne als Führung für das Motoröl verwendet werden, jedoch müssen vorher alle Öffnungen zum Entfernen der Kerne in einen langwierigen Arbeitsprozeß verschlossen werden und geringste Spuren an Kernsand gelangen in den Schmierölkreislauf und führen zwangsläufig zu schweren Motorschäden.

Es ist daher Aufgabe der Erfindung eine biegesteife Anordnung der Lagerstühle und Lagerdeckel zu schaffen, welche mit geringem Arbeitsaufwand herstellbar ist.

Gelöst wird diese Aufgabe durch die kennzeichnenden Merkmale des Patentanspruches 1.

Durch die Wahl von im Schnitt betrachtet offenen Profilen für die seitlichen Fortsätze der Lagerdeckel und die seitlichen Versteifungselemente wird eine hohe Biegesteifigkeit erreicht, ohne daß nach dem Guß ein unzumutbar hohes Arbeitspensum beim Gußputzen erforderlich wäre.

Eine vorteilhafte Formgebung der Profile ergibt sich aus Anspruch 1.

Die Wahl H-förmiger Profile ergibt gute Biegesteifigkeit bezüglich seiner Hauptachsen und gleichzeitig läßt sich der Formsand nach dem Guß leicht entfernen.

Ein Ausführungsbeispiel für die erfindungsgemäße Ausbildung der Kurbelwellenlagerung ist in Zeichnungen dargestellt. Es zeigt:
- Fig. 1: einen Querschnitt durch eine Brennkraftmaschine mit Lagerstuhl und Lagerdeckel
- Fig. 2: einen Schnitt II-II im Bereich eines Lagerdeckels mit Versteifungselement
- Fig. 3: einen Schnitt III-III durch einen seitlichen Fortsatz des Lagerdeckels
- Fig. 4: Draufsicht von der Ölwanne her gesehen auf einen Teil des aus Lagerdeckeln und Versteifungselementen bestehenden leiterförmigen Rahmens

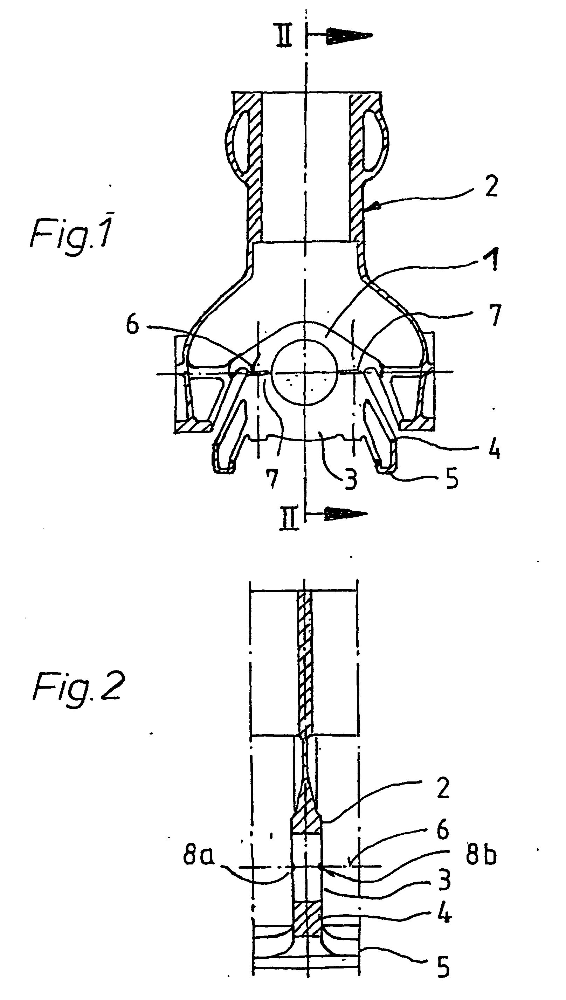

Figur 1 zeigt einen Querschnitt durch ein Kurbelgehäuse im Bereich eines Lagerstuhls 1. Der Lagerstuhl 1 bildet mit dem Kurbelgehäuse 2 die übliche gußtechnische Einheit. Erfindungsgemäß wird jedoch auch der Lagerdeckel 3 zusammen mit dem Lagerstuhl 1 als gußtechnische Einheit hergestellt. Zur Versteifung wird der Lagerdeckel 3 mit seitlichen Fortsätzen 4 ausgebildet. Die seitlichen Fortsätze 4 wiederum werden in Motorlängsrichtung durch Versteifungselemente 5 untereinander verbunden. Die Versteifungselemente 5 sind im Schnitt gesehen U-förmig ausgebildet; so daß sie hohe Steifigkeit aufweisen. Da es sich um ein offenes Profil handelt, läßt sich nach dem Guß der Gießsand leicht entfernen. Die Fortsätze 4 sind profiliert, um bei geringem Eigengewicht eine hohe Biegesteifigkeit zu besitzen. Da die Kurbelwellenlager geteilt sind wird der Lagerdeckel 3 vom Lagerstuhl 1 in einer Ebene 6 in Höhe der Mitte einer Kurbelwelle durch Bruchtrennen getrennt. Zum Zwecke der Bruchtrennung sind Kerben 7 vorgesehen.

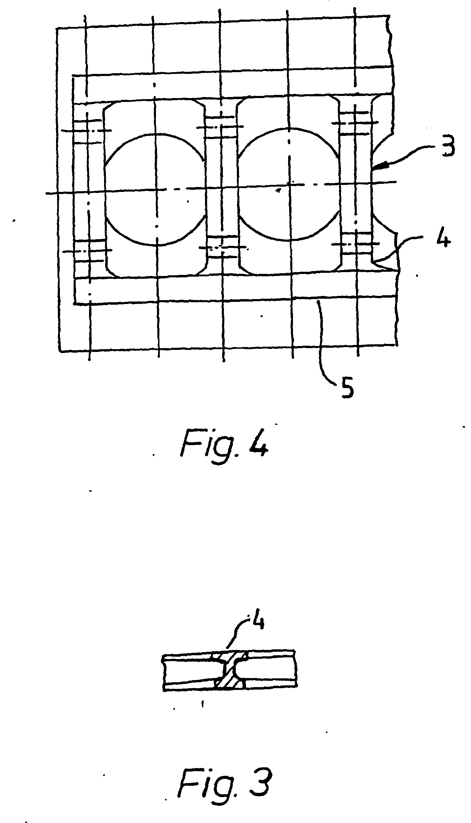

Figur 2 zeigt im Schnitt II-II die Ebene von Lagerstuhl 1 und Lagerdeckel 3. Zwischen Lagerstuhl 1 und Lagerdeckel 3 sind in der Ebene 6 Kerben 8a, 8b vorgesehen, um hier eine gezielte Bruchtrennung herbeizuführen. Die Lagerdeckel 3 weisen wie auch in Figur 4 zu sehen ist, seitliche Fortsätze 4 auf, die mit Versteifungselementen 5 in Motorlängsrichtung zu einer gußtechnischen Einheit verbunden sind.

Die Profilierung eines der seitlichen Fortsätze 4 ist im Schnitt III-III in Fig. 3 detailiert dargestellt. Das Profil weist H-förmige Strukturen auf, nach dem Guß läßt sich der Gießsand wegen des allseits offenen Profils leicht entfernen. Das H-förmige Profil garantiert jedoch hohe Biegesteifigkeit in Quer- und Längsrichtung des Motors.

Figur 4 zeigt einen Ausschnitt des Kurbelgehäuses von der Ölwanne her betrachtet. Die Versteifungselemente 5 verbinden die Fortsätze 4 der Lagerdeckel 3 zu einem sehr biegesteifen, leiterförmigen Rahmen. Da sowohl die Profile der Fortsätze 4 ( Fig. 3 ) als auch die Profile der Versteifungselemente 5 ( Fig. 1) offen und damit kernlos sind, kann der Formsand nach dem Guß sehr leicht entfernt werden, ohne daß arbeitsintensive und damit natürlich auch kostenrelevante Nacharbeit erforderlich wäre.

## Patentansprüche

1. Kurbelwellenlagerung für Brennkraftmaschinen, bei der die Kurbelwelle in geteilten Lagern geführt ist und die Lagerschalen zwischen Lagerstühlen und Lagerdeckeln angeordnet sind, sowie die Lagerdeckel seitliche Fortsätze aufweisen, welche in Längsrichtung durch Versteifungselemente untereinander verbunden sind, wobei die Lagerstühle, die Lagerdeckel und die Versteifungselemente eine in Gußtechnik hergestellte Einheit bilden, welche mittels Bruchtrennen in einer Ebene in Kurbelwellenmittel geteilt und durch Schraubbolzen beim Zusammenbau wieder verbunden werden, **dadurch gekennzeichnet, daß** die seitlichen Fortsätze (4) der Lagerdeckel (3) und die Versteifungselemente (5) aus offenen, kernlosen Profilen bestehen.

2. Kurbelwellenlagerung nach Anspruch 1, **dadurch gekennzeichnet, daß** die Profile der Fortsätze (4) im Schnitt gesehen H-förmig und die Profile der Versteifungselemente (5) im Schnitt gesehen U-förmig und somit beide Profile kernlos ausgeführt sind.

## Claims

1. A crankshaft bearing for internal combustion engines, in which the crankshaft is guided in divided bearings and the bearing shells are arranged between bearing blocks and bearing caps and the bearing caps have lateral projections which are connected together in the longitudinal direction by reinforcing elements, the bearing blocks, the bearing caps and the reinforcing elements forming a unit manufactured in a casting technique, which is divided into crankshaft means by being split along a plane and is reconnected during assembly by screw bolts, **characterised in that** the lateral projections (4) of the bearing caps (3) and the reinforcing elements (5) comprise open, core-less profiles.

2. A crankshaft bearing according to Claim 1, **characterised in that** the profiles of the projections (4) are H-shaped as seen in section and the profiles of the reinforcing elements (5) are U-shaped as seen in section and both profiles are therefore of a core-less construction.

## Revendications

1. Palier de vilebrequin pour moteurs à combustion, dans lequel le vilebrequin passe par des paliers à chapeau, les coussinets de palier sont disposés entre des selles d'appui et les chapeaux de palier, les chapeaux de palier présentant des prolongements latéraux reliés ensemble dans le sens longitudinal par des éléments raidisseurs. les selles d'appui, les chapeaux de palier et les éléments raidisseurs formant une unité de coulée séparée en deux par rupture dans un plan médian du vilebrequin et à nouveau rassemblée par des boulons filetés lors de l'assemblage,
**caractérisé en ce que**
les prolongements latéraux (4) des chapeaux de palier (3) et les éléments raidisseurs (5) sont constitués de profilés ouverts sans noyaux.

2. Palier de vilebrequin selon la revendication 1,
**caractérisé en ce que**
les profilés des prolongements (4), vus en coupe, sont en forme de H et les profilés des éléments raidisseurs (5), vus en coupe, sont en forme de U et ainsi les deux profilés n'ont pas de noyau.
